# EUROPEAN PATENT APPLICATION

(11) **EP 4 645 932 A1**
(43) Date of publication of application: **05.11.2025**
(21) Application number: 22969770.1
(22) Date of filing: 30.12.2022
(51) Int. Cl.: H04W 24/02

(54) **CONFIGURATION METHOD AND APPARATUS BASED ON PERCEPTION SCENE, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: XU, Jing, Dongguan, Guangdong 523860 (CN)
(74) Representative: Mewburn Ellis LLP
(86) International application number: PCT/CN2022/143903
(87) International publication number: WO 2024/138625

(57) **Abstract**

The present disclosure discloses a configuration method, apparatus and device based on a sensing scene, and a storage medium, and relates to the field of sensing technologies. The method is performed by a first node, and the method includes: sending configuration information of sensing feedback, where the configuration information of the sensing feedback is used to configure at least one of a feedback quantity and a feedback threshold of a second node when sending the sensing feedback; and parsing the sensing feedback according to the configuration information of the sensing feedback. By configuring the sensing feedback, the data format of the sensing feedback between the first node and the second node is ensured to be unified, thereby ensuring the correctness of the sensing feedback.

## Description

### TECHNICAL FIELD

Embodiments of the present disclosure relate to the field of sensing technologies, and particularly, to a configuration method, apparatus and device based on a sensing scene, and a storage medium.

### BACKGROUND

Sensing refers to a technology that uses radio waves to detect parameters of a physical environment, to achieve environmental sensing such as target positioning, action recognition, and imaging, etc. In a sensing scene, a sensing control node controls the sensing scene, and for example, assigns a sensing task to a sensing node; after performing the sensing, the sensing node informs the sensing control node of a sensing result through sensing feedback.

In related technologies, a scheme of sensing feedback is point cloud, which is a set of points in a specific coordinate system. Each point in the point cloud includes information such as a coordinate, intensity, time, etc., that is, the points in the point cloud have a certain data format. In a case where a same node both triggers sensing and performs sensing, sensing data is processed within the same node, so that there is no need to standardize the format of the point cloud.

However, in a case where the sensing control node and the sensing node are different nodes, the sensing feedback cannot be parsed correctly if there is no unified data format between the different nodes, which is a problem that needs to be solved.

### SUMMARY

The embodiments of the present disclosure provide a configuration method, apparatus and device based on a sensing scene, and a storage medium. The described technical solution is as follows:

According to an aspect of the embodiments of the present disclosure, a configuration method based on a sensing scene is provided, the method is performed by a first node, and the method includes:
sending configuration information of sensing feedback, where the configuration information of the sensing feedback is used to configure at least one of a feedback quantity and a feedback threshold of a second node when sending the sensing feedback; and
parsing the sensing feedback according to the configuration information of the sensing feedback.

According to an aspect of the embodiments of the present disclosure, a configuration method based on a sensing scene is provided, the method is performed by a second node, and the method includes:
receiving configuration information of sensing feedback, where the configuration information of sensing feedback is used to configure at least one of a feedback quantity and a feedback threshold of the second node when sending the sensing feedback; and
sending the sensing feedback according to the configuration information of the sensing feedback.

According to an aspect of the embodiments of the present disclosure, a configuration apparatus based on a sensing scene is provided, and the apparatus includes: a sending module and a parsing module.

The sending module is configured to send configuration information of sensing feedback, where the configuration information of the sensing feedback is used to configure at least one of a feedback quantity and a feedback threshold of a second node when sending the sensing feedback.

The parsing module is configured to parse the sensing feedback according to the configuration information of the sensing feedback.

According to an aspect of the embodiments of the present disclosure, a configuration apparatus based on a sensing scene is provided, and the apparatus includes: a receiving module and a sending module.

The receiving module is configured to receive configuration information of sensing feedback, where the configuration information of the sensing feedback is used to configure at least one of a feedback quantity and a feedback threshold of a second node when sending the sensing feedback.

The sending module is configured to send the sensing feedback according to the configuration information of the sensing feedback.

According to an aspect of the embodiments of the present disclosure, a sensing device is provided, and the sensing device includes a transceiver and a processor connected to the transceiver.

The transceiver is configured to send configuration information of sensing feedback, where the configuration information of the sensing feedback is used to configure at least one of a feedback quantity and a feedback threshold of a second node when sending the sensing feedback.

The processor is configured to parse the sensing feedback according to the configuration information of the sensing feedback.

According to an aspect of the embodiments of the present disclosure, a sensing device is provided, and the sensing device includes a transceiver.

The transceiver is configured to receive configuration information of sensing feedback, where the configuration information of the sensing feedback is used to configure at least one of a feedback quantity and a feedback threshold of a second node when sending the sensing feedback; and send the sensing feedback according to the configuration information of the sensing feedback.

According to an aspect of the embodiments of the present disclosure, a computer program is stored in the computer-readable storage medium, and the computer program is used to be executed by a processor, to implement the aforementioned configuration method based on the sensing scene.

According to an aspect of the embodiments of the present disclosure, a chip is provided, the chip includes a programmable logic circuit and/or program instructions, and the chip, when running, is used to implement the aforementioned configuration method based on the sensing scene.

According to an aspect of the embodiments of the present disclosure, a computer program product or a computer program is provided, the computer program product or the computer program includes computer instructions, and the computer instructions are stored in a computer-readable storage medium, and a processor reads and executes the computer instructions from the computer-readable storage medium to implement the aforementioned configuration method based on the sensing scene.

The technical solutions provided in the embodiments of the present disclosure may bring the following beneficial effects.

By sending the configuration information of the sensing feedback to the second node and then parsing the sensing feedback according to the configuration information of the sensing feedback, the first node and the second node have the same understanding of the data format of the sensing feedback, thereby ensuring that the first node can correctly parse the sensing feedback, and improving the accuracy of sensing.

### BRIEF DESCRIPTION OF THE DRAWINGS

In order to more clearly illustrate the technical solutions in the embodiments of the present disclosure, the drawings to be used in the description of the embodiments will be briefly introduced below. Obviously, the drawings in the following description are merely some embodiments of the present disclosure. For those ordinary skilled in the art, other drawings may also be obtained based on these drawings, without creative work.
FIG. 1 illustrates a schematic diagram of different modes of sensing.
FIG. 2 illustrates a block diagram of a sensing system provided in an embodiment of the present disclosure.
FIG. 3 illustrates a flow chart of a configuration method based on a sensing scene provided in an embodiment of the present disclosure.
FIG. 4 illustrates a flow chart of a configuration method based on a sensing scene provided in an embodiment of the present disclosure.
FIG. 5 illustrates a flow chart of a configuration method based on a sensing scene provided in an embodiment of the present disclosure.
FIG. 6 illustrates a flow chart of a configuration method based on a sensing scene provided in an embodiment of the present disclosure.
FIG. 7 illustrates a structural block diagram of a configuration apparatus based on a sensing scene provided in an embodiment of the present disclosure.
FIG. 8 illustrates a structural block diagram of a configuration apparatus based on a sensing scene provided in an embodiment of the present disclosure.
FIG. 9 illustrates a structural schematic diagram of a sensing device provided in an embodiment of the present disclosure.

### DETAILED DESCRIPTION

In order to make the purposes, technical solutions and advantages of the present disclosure more clear, the implementations of the present disclosure will be further described in detail below with reference to the drawings.

A network architecture and a service scene described in the embodiments of the present disclosure are intended to more clearly illustrate the technical solutions of the embodiments of the present disclosure, and do not constitute a limitation on the technical solutions provided in the embodiments of the present disclosure. Those ordinary skilled in the art may know that with the evolution of the network architecture and the emergence of new service scenes, the technical solutions provided in the embodiments of the present disclosure are also applicable to similar technical problems.

Before introducing the technical solutions of the present disclosure, some background technical knowledge involved in the present disclosure is first introduced and explained. The following related technologies, as optional solutions, may be arbitrarily combined with the technical solutions of the embodiments of the present disclosure, which all belong to the protection scope of the embodiments of the present disclosure. The embodiments of the present disclosure include at least part of the following contents.

Sensing refers to a technology that uses radio waves to detect parameters of a physical environment, to achieve environmental sensing such as target positioning, action recognition, and imaging, etc. Nodes participating in sensing are as follows:
- A sensing sending node: a sending node of a sensing signal;
- A sensing receiving node: a receiving node of the sensing signal;
- A sensing node: the sensing sending node and the sensing receiving node are collectively referred to as sensing nodes, that is, nodes that perform sensing;
- A sensing control node: a node that controls a sensing task. The sensing control node configures the sensing task to the sensing node, and the sensing node, after performing the sensing, feeds back a sensing result to the sensing control node. In some embodiments of the present disclosure, a sensing trigger node may be regarded as the sensing control node.

Under a technological developing trend of an increasing overlap between a spectrum of wireless communication gradually and a spectrum of sensing, the integrated communication and sensing technology merges the two functions of wireless communication and sensing, and may use radio resources of wireless communication to implement the function of sensing. That is, widely deployed cellular networks may be used to implement sensing services in larger areas; a base station and multiple terminals may be used for joint sensing, to achieve a higher sensing precision; and hardware modules of the wireless communication may be reused to implement the sensing function, to reduce costs. In short, the integrated communication and sensing technology enables future wireless communication systems to have a sensing capability, and provides a foundation for the development of future services such as smart transportation, smart cities, smart factories, drones, etc.

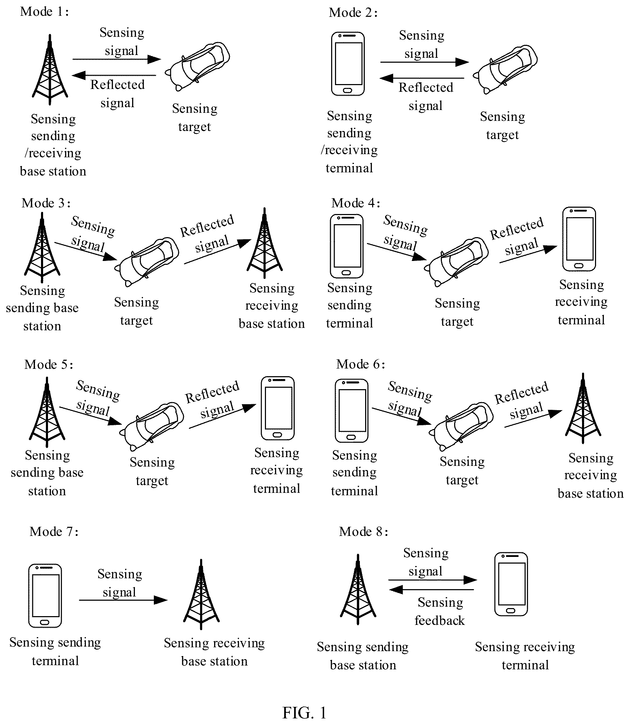

For sensing, it may be implemented through at least one of 8 modes. FIG. 1 illustrates the 8 modes of sensing.

Mode 1: a base station transmits and receives sensing on its own. In mode 1, the sensing sending node and the sensing receiving node are the same base station. That is, the base station sends a sensing signal to a sensing target, and after the sensing signal is reflected by the sensing target, the same base station receives a reflected signal (i.e., the sensing signal after being reflected by the sensing target).

Mode 2: a terminal transmits and receives sensing on its own. In mode 2, the sensing sending node and the sensing receiving node are the same terminal. That is, the terminal sends a sensing signal to a sensing target, and after the sensing signal is reflected by the sensing target, the same terminal receives a reflected signal.

Mode 3: base stations are coordinated for sensing. In mode 3, the sensing sending node and the sensing receiving node are different base stations. That is, a base station sends a sensing signal to a sensing target, and after the sensing signal is reflected by the sensing target, another base station receives a reflected signal.

Mode 4: terminals are coordinated for sensing. In mode 4, the sensing sending node and the sensing receiving node are different terminals. That is, a terminal sends a sensing signal to a sensing target, and after the sensing signal is reflected by the sensing target, another terminal receives a reflected signal.

Mode 5: a base station and a terminal are coordinated for sensing. In mode 5, the sensing sending node is the base station, and the sensing receiving node is the terminal. That is, the base station sends a sensing signal to a sensing target, and after the sensing signal is reflected by the sensing target, the terminal receives a reflected signal.

Mode 6: a terminal and a base station are coordinated for sensing. In mode 6, the sensing sending node is the terminal, and the sensing receiving node is the base station. That is, the terminal sends a sensing signal to a sensing target, and after the sensing signal is reflected by the sensing target, the base station receives a reflected signal.

Mode 7: a sensing target is a sensing sending node. In mode 7, the sensing sending node is a terminal, and the sensing receiving node is a base station. Since the sensing target (terminal) is the sensing sending node, there is no reflection after the sensing signal is sent by the sensing sending node (terminal) to the sensing receiving node (base station), and a sensing result may be directly parsed by the base station after receiving.

Mode 8: a sensing target is a sensing receiving node. In mode 8, a sensing sending node is a base station, and the sensing receiving node is a terminal. Since the sensing target (terminal) is the sensing receiving node, the terminal, after receiving the sensing signal, needs to feed back the sensing result to the base station, so that the base station knows the sensing result.

In the 8 sensing modes shown in FIG. 1, there is only a single sensing node (for example, in mode 1 and mode 2, the single node is both a sensing sending node and a sensing receiving node), or a pair of sensing nodes (for example, in mode 3 to mode 8, the sensing sending node and the sensing receiving node are different paired nodes). In a wireless communication system, the number of terminal devices (for example, mobile phones, Internet of Things (IoT) devices, etc.) is large, and when there are multiple sensing nodes (including the sensing sending node and the sensing receiving node, i.e., base stations, mobile phones, IoT devices, etc., that can send and/or receive the sensing signal) around a sensing target, joint participation of multiple sensing nodes in sensing will be able to improve the accuracy of sensing, and may meet more complex sensing service requirements, and provide richer sensing services. When there are multiple sensing nodes in the system, there may be a sensing control node to control and manage the entire sensing system, to improve efficiency. The sensing control node may be a base station, a terminal, or a core network element.

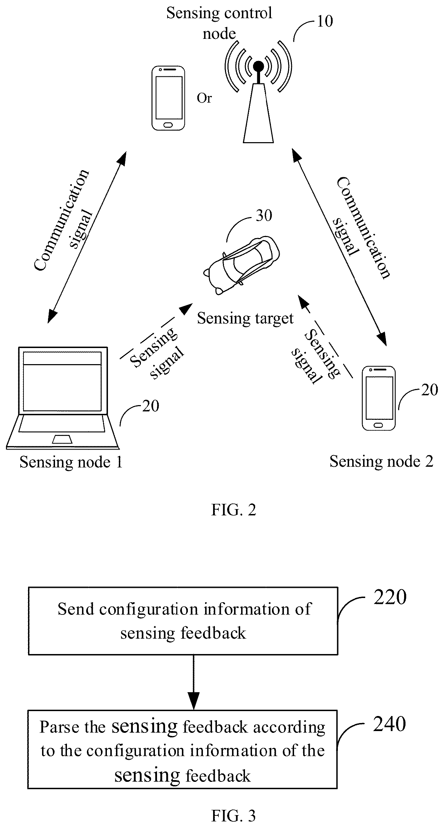

Please refer to FIG. 2, it illustrates a block diagram of a sensing system provided in an exemplary embodiment of the present disclosure. The sensing system may include: a sensing control node 10, sensing nodes 20, and a sensing target 30.

The sensing control node 10 refers to a node that controls a sensing process; and it may be a base station, a terminal, or a core network element. The sensing control node 10 may play multiple roles in the sensing system. For example, the sensing control node 10 may be a sensing trigger node, by which sensing is initiated, a configuration of the sensing scene is set, and sensing feedback sent by the sensing node is analyzed, etc.

The sensing node 20 includes a sensing sending node and a sensing receiving node; and it may include a base station, a terminal, an IoT device, or various handheld devices, vehicle-mounted devices, wearable devices, computing devices or other processing devices connected to a wireless modem, as well as various forms of user equipment, mobile stations (MS), etc., that have a wireless communication function. The number of sensing nodes 20 is usually multiple, and one or more sensing nodes 20 may be distributed in an area controlled by each sensing control node 10.

The sensing target 30 is a target object that needs to be sensed, including a person or an object to be sensed. For example, in a case where a sensing application is to monitor indoor intrusion, the sensing target 30 is an indoor intruder; in a case where a sensing application is to measure a vehicle speed, the sensing target 30 is a target vehicle on a road.

The sensing control node 10 communicates with the sensing node 20 through a communication signal. For example, the sensing control node 10 sends a sensing task, that is, informs a sensing configuration, to the sensing node 20, or the sensing node 20 reports sensing feedback to the sensing control node 10, etc. The sensing node 20, after receiving the sensing task assigned by the sensing control node 10, senses the sensing target 30 by sending or receiving the sensing signal.

Herein, a scheme for the sensing node 20 to perform sensing feedback to the sensing control node 10 is point cloud, that is, a data set of points in a specific coordinate system. Points contain rich information, including three-dimensional coordinates X, Y, Z, and color, classification value, intensity value, time, etc., which are not listed here one by one. If triggering the sensing and performing the sensing are completed by the same node, there is no need to standardize the format of the point cloud: on the one hand, the sensing data is processed within the same node, and the format of the data can be uniformly agreed upon between different processing modules; on the other hand, since there is no need to transmit between nodes, there is no feedback overhead. However, when the sensing control node (sensing trigger node) and the sensing node are two independent nodes, there is no definite data format. Since the two nodes do not have a unified understanding of the data format, the feedback cannot be parsed. If the two nodes use a fixed format, they will not be able to adapt to the sensing requirements, resulting in inaccurate sensing information or excessive sensing overhead.

The method of the present disclosure achieves a unified understanding of the data format of sensing feedback between the sensing control node and the sensing node, by sending a configuration for sensing feedback to the sensing node by the sensing control node (sensing trigger node).

The technical solutions of the present disclosure are introduced and explained below through several embodiments.

Please refer to FIG. 3, it illustrates a flow chart of a configuration method based on a sensing scene provided in an embodiment of the present disclosure. The method is performed by a first node, and the first node may be the sensing control node 10 in the sensing system shown in FIG. 2. The method may include the following steps:

### Step 220: send configuration information of sensing feedback.

The first node sends the configuration information of the sensing feedback to a second node, that is, informs the second node of a data type and a format to be used in sending the sensing feedback. The data type is a type of sensing data contained in feedback information, and the format is a feedback form of data of each data type in the sensing feedback. For example, the data type may be received energy, speed, etc.; the format may be {received energy, Doppler shift, delay}, etc. The sensing feedback is used to feed back a sensing result, or to feed back a measurement result of the sensing signal; the sensing feedback includes one or more pieces of feedback information about the sensing result.

The first node is a sensing control node (sensing trigger node) in the sensing scene, and the second node is a sensing node in the sensing scene. The first node configures a sensing task (e.g., indoor intrusion monitoring, target positioning, etc.) and sends configuration information of sensing feedback (e.g., feedback area, feedback value accuracy, etc.), to the second node; and after the second node performs sensing, the first node receives the sensing feedback of the second node. The first node may be a core network, a server, a base station or a terminal.

That is, the first node configures a sensing task to the second node; the second node sends a sensing signal, and the sensing signal is received by the second node after being reflected by a sensing target; the second node sends the sensing feedback to the first node, and the sensing feedback is used to feed back a sensing result, and the sensing feedback includes feedback information related to the sensing result.

In some embodiments, the configuration information of the sensing feedback is used to configure at least one of a feedback quantity and a feedback threshold of the second node when sending the sensing feedback. That is, the configuration information of the sensing feedback includes the feedback quantity; or, the configuration information of the sensing feedback includes the feedback threshold; or, the configuration information of the sensing feedback includes the feedback quantity and the feedback threshold.

The feedback quantity is used to indicate the number N of pieces of feedback information carried in the sensing feedback. In order to constrain the feedback quantity, a limited number of pieces of feedback information needs to be selected out from multiple sensing results.

In some embodiments, the feedback quantity indicates that the number of pieces of feedback information carried in the sensing feedback is N; N pieces of feedback information include at least one of the following:
- N pieces of feedback information sorted in ascending order according to delay values;
- N pieces of feedback information sorted in descending order according to received energy values;
   where N pieces of feedback information include at least one of: the aforementioned N received energy sorted in descending order; and delays or position information corresponding to the N received energy respectively.
- N pieces of feedback information sorted in descending order according to Doppler shift values;
   where N pieces of feedback information include at least one of: the aforementioned N Doppler shifts sorted in descending order; and delays or position information corresponding to the N Doppler shifts respectively.

The feedback threshold is used to indicate a threshold that feedback information carried in the sensing feedback meets.

In some embodiments, the feedback information that meets the feedback threshold includes at least one of the following:
- Feedback information with a received energy value greater than or equal to the feedback threshold;
- Feedback information with a Doppler shift value greater than or equal to the feedback threshold;
- Feedback information with a moving speed value greater than or equal to the feedback threshold.

The configuration information is related to at least one of the following factors: a sensing service requirement; and resource overhead required for the sensing feedback. For example, in a case where the sensing service requirement is to only need to identify a large change in the environment (e.g., the sensing task is to monitor indoor intrusions, which only needs to identify the large change, and does not need to identify details), the feedback overhead may be reduced by reducing the feedback quantity. For another example, an energy threshold may be set to shield signals that may cause large sensing errors. For another example, when the resource overhead required for the sensing feedback is limited, the feedback overhead may be reduced by increasing the feedback threshold value.

**Step 240: parse the sensing feedback according to the configuration information of the sensing feedback.**

The first node, after receiving the sensing feedback sent by the second node, parses the sensing feedback according to the configuration information of the sensing feedback.

In some embodiments, the configuration information of the sensing feedback includes a feedback quantity; the first node reads data in the sensing feedback and parses out N pieces of feedback information from the sensing feedback, where N is a number indicated by the feedback quaCntity , and N is a positive integer.

In some embodiments, the configuration information of the sensing feedback includes a feedback threshold; the first node reads data in the sensing feedback, and parses out feedback information that meets the feedback threshold from the sensing feedback.

In some embodiments, the configuration information of the sensing feedback includes a feedback quantity and a feedback threshold; the first node reads data in the sensing feedback, and parses out N pieces of feedback information that meet the feedback threshold from the sensing feedback, where N is a number indicated by the feedback quantity, and N is a positive integer.

To summarize, the technical solution provided in the embodiments of the present disclosure achieves unification of the data format of the sensing feedback between the first node and the second node, by sending the configuration information of the sensing feedback to the second node that performs sensing, and then parsing the sensing feedback sent by the second node based on the configuration information of the sensing feedback, so that the first node obtains a correct sensing feedback result. This solution may configure different parameters for different sensing tasks, and on the basis of consistent information understanding between the first node and the second node, a flexible configuration may also be performed according to the sensing application scene and sensing feedback overhead, so that the sensing feedback better adapts to service requirements.

In an optional embodiment based on FIG. 3, the configuration information of the sensing feedback may be the feedback quantity or the feedback threshold. The following describes two types of information that may be carried in the aforementioned configuration information of the sensing feedback, in some embodiments.

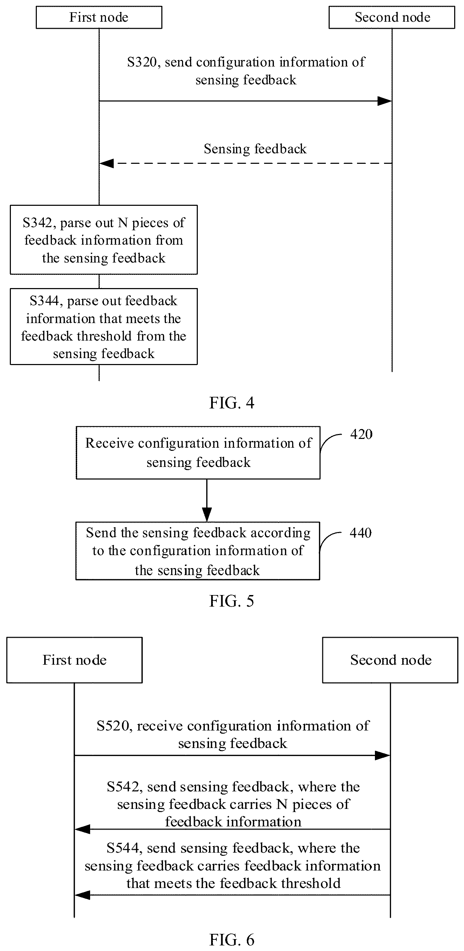

FIG. 4 illustrates a flow chart of a configuration method based on a sensing scene provided in an embodiment of the present disclosure. The method may be applied to the sensing system shown in FIG. 2 and performed by the first node. The first terminal may be the sensing control node (sensing trigger node) 10 in the sensing system shown in FIG. 2 . The method may include the following steps.

**Step 320: send configuration information of sensing feedback.**

The first node sends the configuration information of the sensing feedback to a second node, that is, informs the second node of information such as a data type and a format used in sending the sensing feedback. The sensing feedback includes one or more pieces of feedback information about a sensing result.

The first node is a sensing control node (sensing trigger node) in the sensing scene, and the second node is a sensing node in the sensing scene. The first node configures a sensing task to the second node and receives sensing feedback of the second node. The first node may be a core network, a server, a base station or a terminal.

In some embodiments, the configuration information of the sensing feedback is used to configure at least one of a feedback quantity and a feedback threshold of the second node when sending the sensing feedback. That is, the configuration information of the sensing feedback includes the feedback quantity; or, the configuration information of the sensing feedback includes the feedback threshold; or, the configuration information of the sensing feedback includes the feedback quantity and the feedback threshold.

The feedback quantity and the feedback threshold are described below respectively.
1) The configuration information of the sensing feedback carries the feedback quantity.

In a complex environment, the sensing signal is reflected or refracted by objects in the environment, which forms multiple discrete echoes with a large number. However, it may be sufficient to identify a large change in the environment, for some sensing tasks, such as monitoring whether there is an intruder or monitoring the degree of road congestion, etc. For these sensing tasks, it may only need a small amount of sensing results to preliminarily reflect this environment state. Therefore, limited sensing information may be fed back by limiting the feedback quantity, thereby reducing the feedback overhead.

The feedback quantity is used to indicate the number N of pieces of feedback information carried in the sensing feedback. In order to constrain the feedback quantity, a limited number of feedback information needs to be selected out from multiple sensing results.

In some embodiments, the feedback quantity indicates that the number of pieces of feedback information carried in the sensing feedback is N; and N pieces of feedback information include at least one of the following:
- N pieces of feedback information sorted in ascending order according to delay values;
   since the sensing signal after being reflected or refracted for multiple times usually has a large delay, first N pieces of feedback information sorted in ascending order according to delay values are selected, which may select out a signal that has a high probability of being reflected directly.
- N pieces of feedback information sorted in descending order according to received energy values;
   since the received energy of a directly reflected sensing signal is usually greater than the received energy of a sensing signal after being reflected or refracted for multiple times, first N pieces of feedback information sorted in descending order according to received energy values are selected, which may select out a signal that has a high probability of being reflected directly. In addition, since an echo signal with weaker received energy (i.e., a signal received by the sensing node after the sensing signal is reflected) is generally more affected by noise or interference, the sensing error obtained based on this echo signal is larger, therefore, the first N pieces of feedback information sorted in descending order according to received energy values are selected, which may shield the echo signal that may cause a larger sensing error.
   Herein, N pieces of feedback information include at least one of: the aforementioned N received energy values sorted in descending order; and delays or position information corresponding to the N received energy values respectively.
- N pieces of feedback information sorted in descending order according to Doppler shift values.
   Since a Doppler shift value of a moving object is greater than that of a stationary object, first N pieces of feedback information sorted in descending order according to Doppler shift values are selected, which may shield the echo feedback formed by the sensing of the stationary object.
   In a possible implementation, a moving speed value may be used instead of a Doppler shift value; that is, the N pieces of feedback information include N pieces of feedback information sorted in descending order according to moving speed values.
   Herein, N pieces of feedback information include at least one of: the aforementioned N Doppler shift values sorted in descending order; and delays or position information corresponding to the N Doppler shift values respectively.

It should be noted that, the above listed is only a partial example of schemes of limiting the feedback quantity. The schemes of limiting the feedback quantity may be freely combined based on the above basic scheme. The present disclosure does not impose any limitation on this.

2) The configuration information of the sensing feedback carries the feedback threshold.

The feedback threshold is used to indicate a threshold that feedback information carried in the sensing feedback needs to meet.

In a complex environment, the sensing signal is reflected or refracted or the like by objects in the environment, which forms multiple discrete echo signals. However, parameters in the echo signal obtained through being reflected or refracted for multiple times usually cannot directly reflect the environment. For example, the position of the object cannot be determined based on delay information in this echo signal, because the delay is a sum of delays of multiple paths after being reflected or refracted by multiple objects, and is not associated with a certain object. This echo signal cannot provide effective information for the sensing task. In order to avoid such invalid feedback to reduce feedback overhead, echo signals may be filtered by setting a feedback threshold.

In some embodiments, the feedback information that meets the feedback threshold includes at least one of the following:
- Feedback information with a received energy value greater than or equal to the feedback threshold;
   since the received energy of a directly reflected sensing signal is usually greater than the received energy of a sensing signal after being reflected or refracted for multiple times, therefore, by setting a feedback threshold P for the received energy, that is, sensing feedback is performed only for an echo signal with a received energy value greater than P, and a signal that has a high probability of being directly reflected may be selected out.
   In addition, since an echo signal with weaker received energy is generally more affected by noise or interference, the sensing error obtained based on this echo signal is larger. Therefore, by setting the feedback threshold P for the received energy, that is, sensing feedback is performed only for an echo signal with a received energy value greater than P, an echo signal that may cause a large sensing error may be shielded.
   Herein, the feedback information with received energy values greater than or equal to the feedback threshold includes at least one of: received energy values of the feedback information; and delays or position information corresponding to the received energy values respectively.
- Feedback information with a Doppler shift value greater than or equal to the feedback threshold;
   since a Doppler shift value of a moving object is greater than that of a stationary object, by setting a feedback threshold V of Doppler shifts, that is, only echo signals with Doppler shift values greater than V may be fed back, an echo signal formed by the stationary object may be shielded.
   Herein, the feedback information with Doppler shift values greater than or equal to the feedback threshold includes at least one of: Doppler shift values of the feedback information; and delays or position information corresponding to the Doppler shift values respectively.
- Feedback information with a moving speed value greater than or equal to the feedback threshold.
   The principles of moving speeds and Doppler shifts are similar, which may both be used to sensing feedback for moving objects. That is, since the moving speed value of a moving object is greater than that of a stationary object, by setting the feedback threshold V of the moving speed, that is, only an echo signal with a moving speed greater than V can be fed back, a echo feedback formed by the stationary object may be shielded.
   Herein, the feedback information with moving speed values greater than or equal to the feedback threshold includes at least one of: moving speed values of the feedback information; and delays or position information corresponding to the moving speed values respectively.

The configuration information is related to at least one of the following factors: a sensing service requirement; and resource overhead required for the sensing feedback. For different sensing tasks, different feedback quantities may be configured, to reduce feedback overhead while meeting the sensing service requirement. For example, when the sensing task is indoor intrusion monitoring, since it is only necessary to determine whether a person or an object has been added, only a small number of sensing results are required, so the feedback quantity may be lowered to reduce feedback overhead. For another example, in a case where the resource overhead for the sensing feedback is limited, the feedback threshold of the feedback information is increased to reduce the feedback overhead.

In some embodiments, the configuration information of the sensing feedback is further used to configure at least one of a feedback area and a feedback value precision of the second node when sending the sensing feedback. Herein, the feedback area is used to indicate an area corresponding to feedback information carried in the sensing feedback; and the feedback value accuracy is used to indicateaccuracy corresponding to feedback information carried in the sensing feedback.

In some embodiments, the feedback area is in at least one of the following forms:
- A spherical area with a radius R and centered at the first node;
- A spatial area in a coordinate system with the first node as an origin; where the spatial area refers to an area surrounded by multiple sensing coordinates located in the same coordinate system. The spatial area may be a cube or any irregular spatial geometry;
- A fan-shaped open area with the first node as a vertex;
- A fan-shaped closed area with the first node as a vertex;
- A spherical area with a radius R and centered at the second node;
- A spatial area in a coordinate system with the second node as an origin;
- A fan-shaped open area with the second node as a vertex;
- A fan-shaped closed area with the second node as a vertex;
- A spherical area with a radius R and centered at the sensing target;
- The spatial area in a coordinate system with the sensing target as an origin;
- A fan-shaped open area with the sensing target as a vertex;
- A fan-shaped closed area with the sensing target as a vertex;
- A spatial area determined based on a time difference between receiving and sending of the sensing signal; where the spatial area is an area corresponding to the time difference T between receiving and sending of the sensing signal (i.e., the time difference T between the sending time T1 and the receiving time T2); or an area corresponding to a channel delay t (i.e., the delay t between time t1 and time t2).

In some embodiments, the feedback area is represented by at least one of the following information:
- Coordinates in a coordinate system with the first node as an origin;
- Coordinates in a coordinate system with the second node as an origin;
- Coordinates in a reference coordinate system; the reference coordinate system is a coordinate system with a reference node different from the first node and the second node as an origin, and the reference node is a reference system origin different from the first node and the second node, selected according to different sensing scenes. For example, the geodetic coordinate system is selected as the reference coordinate system;
- An angle of incidence (or angle of arrival) with the first node as a vertex;
- An emission angle with the first node as a vertex;
- An angle of incidence (or angle of arrival) with the second node as a vertex;
- An emission angle with the second node as a vertex;
- A connected line between the first node and the second node;
- A length value related to a sensing distance;
- An angle value related to a sensing angle;
- A transmission delay related to the sensing signal; where the transmission delay refers to a time difference T between receiving and sending of the sensing signal (i.e., the time difference T between sending time T1 and receiving time T2); or a channel delay t (i.e., the delay t between time t1 and time t2).

In some embodiments, the configuration information also carries a unit related to the feedback area.

In some embodiments, the configuration information also carries a data division granularity in the feedback area, and the data division granularity is used to indicate a division granularity for sensing signals or echo signals that are merged into the same feedback information for feedback, in the feedback area.

It should be noted that the configuration information of the sensing feedback may be used separately to configure at least one of the feedback area and the feedback value precision of the second node when sending the sensing feedback; or, may be used separately to configure at least one of the feedback quantity and the feedback threshold of the second node when sending the sensing feedback; or, may be used to configure the aforementioned two types of configuration information at the same time. For example, when the sensing feedback is in the form of point cloud, these two types of configuration information may be configured separately or in a combination; in addition, this type of configuration information such as the feedback quantity and the feedback threshold may also be used in a sensing scene where the sensing feedback is in the form of feedback with multiple variables.

**Step 342: parse out N pieces of feedback information from the sensing feedback.**

This step is performed in a case where the configuration information of the sensing feedback carries the feedback quantity.

Herein, N is a number indicated by the feedback quantity, and N is a positive integer.

In some embodiments, the first node receives the sensing feedback sent by the second node and reads data in the sensing feedback; the sensing feedback is sent by the second node after processing the sensing result according to the configuration information of the sensing feedback sent by the first node in step 320. That is, the first node and the second node have the same understanding of the sensing feedback quantity, so that the first node may parse out feedback information corresponding to the feedback quantity from the sensing feedback, that is, parse out N pieces of feedback information from the sensing feedback.

For example, the configuration information of the sensing feedback carries the feedback quantity, and the configured feedback quantity is 3. The feedback information received by the first node includes energy information {20, 18, 5} dBm. The first node parses out three pieces of feedback information from the sensing feedback: 20 dBm, 18 dBm, and 5 dBm.

**Step 344: parse out, from the sensing feedback, feedback information that meets the feedback threshold.**

This step is performed in a case where the feedback threshold is carried in the configuration information of the sensing feedback.

In some embodiments, the first node receives the sensing feedback sent by the second node and reads data in the sensing feedback; the sensing feedback is sent by the second node after processing the sensing result according to the configuration information of the sensing feedback sent by the first node in step 320. That is, the first node and the second node have the same understanding of the sensing feedback threshold, so that the first node may parse out feedback information that meets the feedback threshold, from the sensing feedback.

For example, the configuration information of the sensing feedback carries the feedback threshold, and the configured feedback threshold is a Doppler shift of 30 Hz, that is, an echo signal with a Doppler shift value greater than or equal to 30 Hz or less than or equal to -30 Hz needs to be fed back. The first node receives the feedback information, which carries the Doppler shift of {300, 300, 300, -40, -40} Hz. The feedback information parsed out by the first node from the sensing feedback includes that the Doppler shift values of the sensing target are 300 Hz, 300 Hz, 300 Hz, -40 Hz, and -40 Hz, respectively, which meet the feedback threshold.

It should be noted that, in a case where the configuration information of the sensing feedback carries the feedback quantity, step 342 is performed; in a case where the configuration information of the sensing feedback carries the feedback threshold, step 344 is performed; in a case where the configuration information of the sensing feedback carries the feedback quantity and the feedback threshold, step 342 and step 344 are performed in no particular order. That is, step 342 and step 344 may be optionally performed, or both may be performed in no particular order.

In some embodiments, the configuration information of the sensing feedback also includes a feedback area; and the first node parses out feedback information corresponding to the feedback area from the sensing feedback.

In some embodiments, the configuration information of the sensing feedback also includes feedback value precision; and the first node parses out feedback information that meets the feedback value precision from the sensing feedback.

In some embodiments, the configuration information of the sensing feedback also includes a feedback area and feedback value precision; and the first node parses out feedback information that corresponds to the feedback area and meets the feedback value precision, from the sensing feedback.

To summarize, in the technical solution provided in the embodiments of the present disclosure, by sending the configuration information of the sensing feedback to the second node that performs sensing, and then parsing the sensing feedback sent by the second node based on the configuration information of the sensing feedback, it is enabled to unify the data format of the sensing feedback between the first node and the second node, so that the first node obtains the correct sensing feedback result.

In addition, this solution may also configure different parameters for different sensing tasks, and a flexible configuration may also be performed according to the sensing application scene and sensing feedback overhead, so that the sensing feedback better adapts to service requirements, while reducing feedback overhead and improving sensing efficiency.

In addition, the configuration information of the sensing feedback configured in this solution may be a free combination of various basic forms and representation methods, which has great flexibility in sensing feedback.

Please refer to FIG. 5, it illustrates a flow chart of a configuration method based on a sensing scene provided in an embodiment of the present disclosure. The method is performed by a second node, and the second node may be the sensing node 20 in the sensing system shown in FIG. 2. The method may include the following steps.

**Step 420: receive configuration information of sensing feedback.**

The second node receives the configuration information of the sensing feedback sent by the first node, that is, the first node informs the second node of a data type and a format used in sending the sensing feedback. The sensing feedback includes one or more pieces of feedback information about a sensing result.

The first node is a sensing control node (sensing trigger node) in the sensing scene, and the second node is a sensing node in the sensing scene. The second node performs sensing according to a sensing task configured by the first node, and sends sensing feedback. The second node may be a base station or a terminal.

In some embodiments, the configuration information of the sensing feedback is used to configure at least one of a feedback quantity and a feedback threshold of the second node when sending the sensing feedback. That is, the configuration information of the sensing feedback includes the feedback quantity; or, the configuration information of the sensing feedback includes the feedback threshold; or, the configuration information of the sensing feedback includes the feedback quantity and the feedback threshold.

The feedback quantity is used to indicate the number N of pieces of feedback information carried in the sensing feedback. In order to constrain the feedback quantity, a limited number of feedback information needs to be selected out from multiple sensing results.

In some embodiments, the feedback quantity indicates that the number of pieces of feedback information carried in the sensing feedback is N; and N pieces of feedback information include at least one of the following:
- N pieces of feedback information sorted in ascending order according to delay values;
- N pieces of feedback information sorted in descending order according to received energy values;
   where N pieces of feedback information include at least one of: the aforementioned N received energy sorted in descending order; and delays or position information corresponding to the N received energy respectively.
- N pieces of feedback information sorted in descending order according to Doppler shift values.
   Herein, N pieces of feedback information include at least one of: the aforementioned N Doppler shifts sorted in descending order; and delays or position information corresponding to the N Doppler shifts respectively.

The feedback threshold is used to indicate a threshold that feedback information carried in the sensing feedback meets.

In some embodiments, the feedback information that meets the feedback threshold includes at least one of the following:
- Feedback information with a received energy value greater than or equal to the feedback threshold;
- Feedback information with a Doppler shift value greater than or equal to the feedback threshold;
- Feedback information with a moving speed value greater than or equal to the feedback threshold.

The configuration information is related to at least one of the following factors: a sensing service requirement; and resource overhead required for the sensing feedback. For example, in a case where the sensing service requirement is to only need to identify a large change in the environment (e.g., the sensing task is to monitor indoor intrusions, which only needs to identify the large change, and does not need to identify details), the feedback overhead may be reduced by reducing the feedback quantity. For another example, an energy threshold may be set to shield signals that may cause large sensing errors. For another example, when the resource overhead required for the sensing feedback is limited, the feedback overhead may be reduced by increasing the feedback threshold value.

**Step 440: send the sensing feedback according to the configuration information of the sensing feedback.**

After performing the sensing, the second node sends the sensing feedback to the first node according to the configuration information of the sensing feedback.

In some embodiments, the configuration information of the sensing feedback includes the feedback quantity; the second node carries the feedback information corresponding to the feedback quantity in the sensing feedback to send, that is, to send the sensing feedback, and the sensing feedback carries N pieces of feedback information, where N is a number indicated by the feedback quantity, and N is a positive integer.

In some embodiments, the configuration information of the sensing feedback includes a feedback threshold; the second node carries the feedback information that meets the feedback threshold in the sensing feedback to send, that is, to send the sensing feedback, and the sensing feedback carries the feedback information that meets the feedback threshold.

In some embodiments, the configuration information of the sensing feedback includes a feedback quantity and a feedback threshold; the second node, according to the feedback quantity and the feedback threshold, carries feedback information corresponding to the feedback quantity and meeting the feedback threshold in the sensing feedback to send.

To summarize, in the technical solution provided in the embodiments of the present disclosure, by receiving the configuration information of the sensing feedback, and then sending the sensing feedback to the first node based on the configuration information of the sensing feedback, it is enabled to unify the data format of the sensing feedback between the first node and the second node, and the sensing feedback may correctly reach the first node. This solution may configure different parameters for different sensing tasks, and on the basis of consistent information understanding between the first node and the second node, a flexible configuration may also be performed according to the sensing application scene and sensing feedback overhead, so that the sensing feedback better adapts to service requirements.

In an optional embodiment based on FIG. 5, the configuration information of the sensing feedback may be the feedback quantity or the feedback threshold. The following describes two types of information that may be carried in the aforementioned configuration information of the sensing feedback, in some embodiments.

FIG6 illustrates a flow chart of a configuration method based on a sensing scene provided in an embodiment of the present disclosure. The method may be applied to the sensing system shown in FIG. 2 and performed by the second node. The first terminal may be the sensing node 20 in the sensing system shown in FIG. 2 . The method may include the following steps.

**Step 520: receive configuration information of sensing feedback.**

The second node receives the configuration information of the sensing feedback sent by the first node, that is, the first node informs the second node of a data type and a format used in sending the sensing feedback.

The first node is a sensing control node (sensing trigger node) in the sensing scene, and the second node is a sensing node in the sensing scene. The second node performs sensing according to a sensing task configured by the first node, and sends sensing feedback. The second node may be a base station or a terminal.

In some embodiments, the configuration information of the sensing feedback is used to configure at least one of a feedback quantity and a feedback threshold of the second node when sending the sensing feedback. That is, the configuration information of the sensing feedback includes the feedback quantity; or, the configuration information of the sensing feedback includes the feedback threshold; or, the configuration information of the sensing feedback includes the feedback quantity and the feedback threshold.

The feedback quantity and the feedback threshold are described below respectively.
1) The configuration information of the sensing feedback carries the feedback quantity.

In a complex environment, the sensing signal is reflected or refracted by objects in the environment, which forms multiple discrete echoes with a large number. However, it may be sufficient to identify a large change in the environment, for some sensing tasks, such as monitoring whether there is an intruder or monitoring the degree of road congestion, etc. For these sensing tasks, it may only need a small amount of sensing results to preliminarily reflect this environment state. Therefore, limited sensing information may be fed back by limiting the feedback quantity, thereby reducing the feedback overhead.

The feedback quantity is used to indicate the number N of pieces of feedback information carried in the sensing feedback. In order to constrain the feedback quantity, a limited number of feedback information needs to be selected out from multiple sensing results.

In some embodiments, the feedback quantity indicates that the number of pieces of feedback information carried in the sensing feedback is N; and N pieces of feedback information include at least one of the following:
- N pieces of feedback information sorted in ascending order according to delay values;
   since the sensing signal after being reflected or refracted for multiple times usually has a large delay, first N pieces of feedback information sorted in ascending order according to delay values are selected, which may select out a signal that has a high probability of being reflected directly.
- N pieces of feedback information sorted in descending order according to received energy values;
   since the received energy of a directly reflected sensing signal is usually greater than the received energy of a sensing signal after being reflected or refracted for multiple times, first N pieces of feedback information sorted in descending order according to received energy values are selected, which may select out a signal that has a high probability of being reflected directly. In addition, since an echo signal with weaker received energy (i.e., a signal received by the sensing node and after being reflected) is generally more affected by noise or interference, the sensing error obtained based on this echo signal is larger, therefore, the first N pieces of feedback information sorted in descending order according to received energy values are selected, which may shield the echo signal that may cause a larger sensing error. Herein, N pieces of feedback information include at least one of: the aforementioned N received energy values sorted in descending order; and delays or position information corresponding to the N received energy values respectively.
- N pieces of feedback information sorted in descending order according to Doppler shift values.
   Since a Doppler shift value of a moving object is greater than that of a stationary object, first N pieces of feedback information sorted in descending order according to Doppler shift values are selected, which may shield the echo feedback formed by the sensing of the stationary object.
   In a possible implementation, a moving speed value may be used instead of a Doppler shift value; that is, the N pieces of feedback information include N pieces of feedback information sorted in descending order according to moving speed values.
   Herein, N pieces of feedback information include at least one of: the aforementioned N Doppler shift values sorted in descending order; and delays or position information corresponding to the N Doppler shift values respectively.

It should be noted that, the above listed is only a partial example of schemes of limiting the feedback quantity. The schemes of limiting the feedback quantity may be freely combined based on the above basic scheme. The present disclosure does not impose any limitation on this.

2) The configuration information of the sensing feedback carries the feedback threshold.

The feedback threshold is used to indicate a threshold that feedback information carried in the sensing feedback needs to meet.

In a complex environment, the sensing signal is reflected or refracted or the like by objects in the environment, which forms multiple discrete echo signals. However, parameters in the echo signal obtained through being reflected or refracted for multiple times usually cannot directly reflect the environment. For example, the position of the object cannot be determined based on delay information in this echo signal, because the delay is a sum of delays of multiple paths after being reflected or refracted by multiple objects, and is not associated with a certain object. This echo signal cannot provide effective information for the sensing task. In order to avoid such invalid feedback to reduce feedback overhead, echo signals may be filtered by setting a feedback threshold.

In some embodiments, the feedback information that meets the feedback threshold includes at least one of the following:
- Feedback information with a received energy value greater than or equal to the feedback threshold;
   since the received energy of a directly reflected sensing signal is usually greater than the received energy of a sensing signal after being reflected or refracted for multiple times, therefore, by setting a feedback threshold P for the received energy, that is, sensing feedback is performed only for an echo signal with a received energy value greater than P, and a signal that has a high probability of being directly reflected may be selected out.
   In addition, since an echo signal with weaker received energy is generally more affected by noise or interference, the sensing error obtained based on this echo signal is larger. Therefore, by setting the feedback threshold P for the received energy, that is, sensing feedback is performed only for an echo signal with a received energy value greater than P, an echo signal that may cause a large sensing error may be shielded.
   Herein, the feedback information with received energy values greater than or equal to the feedback threshold includes at least one of: received energy values of the feedback information; and delays or position information corresponding to the received energy values respectively.
- Feedback information with a Doppler shift value greater than or equal to the feedback threshold;
   since a Doppler shift value of a moving object is greater than that of a stationary object, by setting a feedback threshold V of Doppler shifts, that is, only echo signals with Doppler shift values greater than V may be fed back, an echo signal formed by the stationary object may be shielded.
   Herein, the feedback information with Doppler shift values greater than or equal to the feedback threshold includes at least one of: Doppler shift values of the feedback information; and delays or position information corresponding to the Doppler shift values respectively.
- Feedback information with a moving speed value greater than or equal to the feedback threshold.
   The principles of moving speeds and Doppler shifts are similar, which may both be used to sensing feedback for moving objects. That is, since the moving speed value of a moving object is greater than that of a stationary object, by setting the feedback threshold V of the moving speed, that is, only an echo signal with a moving speed greater than V can be fed back, echo feedback formed by the stationary object may be shielded.
   Herein, the feedback information with moving speed values greater than or equal to the feedback threshold includes at least one of: moving speed values of the feedback information; and delays or position information corresponding to the moving speed values respectively.

The configuration information is related to at least one of the following factors: a sensing service requirement; and resource overhead required for the sensing feedback. For different sensing tasks, different feedback quantities may be configured, to reduce feedback overhead while meeting the sensing service requirement. For example, when the sensing task is indoor intrusion monitoring, since it is only necessary to determine whether a person or an object has been added, only a small number of sensing results are required, so the feedback quantity may be lowered to reduce feedback overhead. For another example, in a case where the resource overhead for the sensing feedback is limited, the feedback threshold of the feedback information is increased to reduce the feedback overhead.

In some embodiments, the configuration information of the sensing feedback is further used to configure at least one of a feedback area and a feedback value precision of the second node when sending the sensing feedback. Herein, the feedback area is used to indicate an area corresponding to feedback information carried in the sensing feedback; and the feedback value accuracy is used to indicateaccuracy corresponding to feedback information carried in the sensing feedback.

In some embodiments, the feedback area is in at least one of the following forms:
- A spherical area with a radius R and centered at the first node;
- A spatial area in a coordinate system with the first node as an origin; where the spatial area refers to an area surrounded by multiple sensing coordinates located in the same coordinate system. The spatial area may be a cube or any irregular spatial geometry;
- A fan-shaped open area with the first node as a vertex;
- A fan-shaped closed area with the first node as a vertex;
- A spherical area with a radius R and centered at the second node;
- A spatial area in a coordinate system with the second node as an origin;
- A fan-shaped open area with the second node as a vertex;
- A fan-shaped closed area with the second node as a vertex;
- A spherical area with a radius R and centered at the sensing target;
- The spatial area in a coordinate system with the sensing target as an origin;
- A fan-shaped open area with the sensing target as a vertex;
- A fan-shaped closed area with the sensing target as a vertex;
- A spatial area determined based on a time difference between receiving and sending of the sensing signal; where the spatial area is an area corresponding to the time difference T between receiving and sending of the sensing signal (i.e., the time difference T between the sending time T1 and the receiving time T2); or an area corresponding to a channel delay t (i.e., the delay t between time t1 and time t2).

In some embodiments, the feedback area is represented by at least one of the following information:
- Coordinates in a coordinate system with the first node as an origin;
- Coordinates in a coordinate system with the second node as an origin;
- Coordinates in a reference coordinate system; the reference coordinate system is a coordinate system with a reference node different from the first node and the second node as an origin, and the reference node is a reference system origin different from the first node and the second node, selected according to different sensing scenes. For example, the geodetic coordinate system is selected as the reference coordinate system;
- An angle of incidence (or angle of arrival) with the first node as a vertex;
- An emission angle with the first node as a vertex;
- An angle of incidence (or angle of arrival) with the second node as a vertex;
- An emission angle with the second node as a vertex;
- A connected line between the first node and the second node;
- A length value related to a sensing distance;
- An angle value related to a sensing angle;
- A transmission delay related to the sensing signal; where the transmission delay refers to a time difference T between receiving and sending of the sensing signal (i.e., the time difference T between sending time T1 and receiving time T2); or a channel delay t (i.e., the delay t between time t1 and time t2).

In some embodiments, the configuration information also carries a unit related to the feedback area.

In some embodiments, the configuration information also carries a data division granularity in the feedback area, and the data division granularity is used to indicate a division granularity for sensing signals or echo signals that are merged into the same feedback information for feedback, in the feedback area.

It should be noted that the configuration information of the sensing feedback may be used separately to configure at least one of the feedback area and the feedback value precision of the second node when sending the sensing feedback; or, may be used separately to configure at least one of the feedback quantity and the feedback threshold of the second node when sending the sensing feedback; or, may be used to configure the aforementioned two types of configuration information at the same time. For example, when the sensing feedback is in the form of point cloud, these two types of configuration information may be configured separately or in a combination; in addition, this type of configuration information such as the feedback quantity and the feedback threshold may also be used in a sensing scene where the sensing feedback is in the form of feedback with multiple variables.

**Step 542: send the sensing feedback, where the sensing feedback carries N pieces of feedback information.**

This step is performed in a case where the configuration information of the sensing feedback carries the feedback quantity.

In some embodiments, after receiving the configuration information of the sensing feedback sent by the first node, the second node processes the sensing feedback information according to the configuration information of the sensing feedback, and carries the processed feedback information in the sensing feedback, to send to the first node, that is, the second node sends the sensing feedback to the first node, and the sensing feedback carries N pieces of feedback information. Since the first node and the second node use the same configuration information of the sensing feedback, that is, have the same understanding of the sensing feedback quantity, the first node may parse out feedback information corresponding to the feedback quantity, from the sensing feedback.

For example, the configuration information of the sensing feedback carries the feedback quantity, and the configured feedback quantity is 3. The second node has sensed five echo signals with received energy of {30dBm, 15dBm, 10dBm, 0dBm, -5dBm}. According to the requirement of the feedback quantity of the configuration information, the second node selects three echo signals with the largest received energy values for feedback, and the feedback information includes the received energy and delays of the three echo signals, that is, the feedback is performed in the form of {received energy, delay}. The sensing feedback information sent by the second node is: {30dBm, 5ns}, {15dBm, 10ns}, {10dBm, 13ns}.

**Step 544: send the sensing feedback, where the sensing feedback carries feedback information that meets the feedback threshold.**

This step is performed in a case where the feedback threshold is carried in the configuration information of the sensing feedback.

In some embodiments, after receiving the configuration information of the sensing feedback sent by the first node, the second node processes the sensing feedback information according to the configuration information of the sensing feedback, and carries the processed feedback information in the sensing feedback, to send to the first node, that is, the second node sends the sensing feedback to the first node, and the sensing feedback carries feedback information that meets the feedback threshold. Since the first node and the second node use the same configuration information of the sensing feedback, that is, have the same understanding of the feedback threshold of sensing, the first node may parse out feedback information that meets the feedback threshold, from the sensing feedback.

For example, the configuration information of the sensing feedback carries a feedback threshold for received energy, and the configured feedback threshold is 0 dBm. The second node has sensed five echo signals with received energy of {30dBm, 15dBm, 10dBm, 0dBm, -5dBm}. According to the requirement of the feedback threshold of the configuration information, four echo signals meeting the requirement are selected for feedback, and the feedback information includes the receiving energy and delays of the four echo signals, that is, the feedback is performed in the form of {receiving energy, delay}. The sensing feedback information sent by the second node is: {30dBm, 5ns}, {15dBm, 10ns}, {10dBm, 13ns}, {0dBm, 16ns}.

For another example, the configuration information of the sensing feedback carries a feedback threshold for Doppler shift, and the configured feedback threshold is 100 Hz. The second node has sensed five echo signals with received energy of {30dBm, 15dBm, 10dBm, 0dBm, -5dBm}, and their corresponding Doppler shifts are {10Hz, 100Hz, 300Hz, 0Hz, 0Hz}. According to the requirement of the feedback threshold of the configuration information, two echo signals that meet the requirement are selected for feedback. In a possible implementation, the feedback information includes the received energy and Doppler shifts of the two echo signals, that is, the feedback is performed in the form of {received energy, Doppler shift}. The sensing feedback information sent by the second node is: {15dBm, 100Hz}, {10dBm, 300Hz}; in another possible implementation, the feedback information includes delays and Doppler shifts of the two echo signals, that is, the feedback is performed in the form of {delay, Doppler shift}. The sensing feedback information sent by the second node is: {10ns, 100Hz}, {13ns, 300Hz}; and in another possible implementation, the feedback information includes the received energy, delays and Doppler shifts of the two echo signals, that is, feedback is performed in the form of {received energy, delay, Doppler shift}. The sensing feedback information sent by the second node is: {15dBm, 0ns, 100Hz}, {10dBm, 13ns, 300Hz}.

It should be noted that, in a case where the configuration information of the sensing feedback carries the feedback quantity, step 542 is performed; in a case where the configuration information of the sensing feedback carries the feedback threshold, step 544 is performed; in a case where the configuration information of the sensing feedback carries the feedback quantity and the feedback threshold, step 542 and step 544 are performed in no particular order. That is, step 542 and step 544 may be optionally performed, or both may be performed in no particular order.

In some embodiments, the configuration information of the sensing feedback includes a feedback area; the second node carries feedback information corresponding to the feedback area in the sensing feedback to send.

In some embodiments, the configuration information of the sensing feedback includes a feedback value precision; the second node carries feedback information that meets the feedback value precision in the sensing feedback to send.

In some embodiments, the configuration information of the sensing feedback includes a feedback area and a feedback value precision; the second node, according to the feedback area and the feedback value precision, carries feedback information corresponding to the feedback area and meeting the feedback value precision in the sensing feedback to send.

To summarize, in the technical solution provided in the embodiments of the present disclosure, by receiving the configuration information of the sensing feedback, and then sending the sensing feedback to the first node based on the configuration information of the sensing feedback, it is enabled to unify the data format of the sensing feedback between the first node and the second node, and the sensing feedback may correctly reach the first node.

In addition, this solution may also configure different parameters for different sensing tasks, and a flexible configuration may also be performed according to the sensing application scene and sensing feedback overhead, so that the sensing feedback better adapts to service requirements, while reducing feedback overhead and improving sensing efficiency.

In addition, the configuration information of the sensing feedback configured in this solution may be a free combination of various basic forms and representation methods, which has great flexibility in sensing feedback.

The following takes a sensing task of indoor intrusion monitoring as an example to demonstrate the configuration method based on the sensing scene of the present disclosure.

The first node triggers the sensing task of indoor intrusion monitoring, and sends configuration information of sensing feedback to the second node. The configuration information of the sensing feedback indicates that the feedback quantity is 3 and the feedback threshold is 0 dBm.

The second node receives the sensing task and performs sensing, that is, sends a sensing signal and receives a sensing signal. The second node, after analyzing the received sensing signal, obtains six echo signals with received energy of {20dBm, 18dBm, 5dBm, 0dBm, -5dBm, -20dBm}. According to the requirement of the configuration information, three echo signals that meet the requirement are selected for feedback, that is, the feedback information is {20dBm, 18dBm, 5dBm}. After receiving the sensing feedback sent by the second node, the first node may directly determine that two objects or persons have been added near the second node by energy information; that is, an echo signal corresponding to 20dBm is an invading person or object, an echo signal corresponding to 18dBm is another invading person or object, and an echo signal corresponding to 5dBm is weaker, and it is most likely not an echo signal reflected directly, so it is not counted in the intrusion monitoring.

The following takes a sensing task of indoor intrusion monitoring as an example to demonstrate the configuration method based on the sensing scene of the present disclosure.

The first node triggers the sensing task of road congestion monitoring and sends configuration information of sensing feedback to the second node. The configuration information of the sensing feedback indicates that the feedback threshold for Doppler shift is 30 Hz, that is, the information of an echo signal with a Doppler shift value greater than or equal to 30 Hz or less than or equal to -30 Hz needs to be fed back.

The second node receives the sensing task and performs sensing, that is, sends a sensing signal and receives a sensing signal. The second node obtains 5 Doppler shifts {300 Hz, 300 Hz, 300 Hz, -40 Hz, -40 Hz} after analyzing the received sensing signal. According to the requirement of the configuration information, since the feedback threshold is 30 Hz, all the above five components need to be fed back. The first node, after receiving the sensing feedback sent by the second node, determines that a direction of the road is unobstructed and another direction is congested; that is, the positive direction of 300 Hz is unobstructed, and the negative direction of -40Hz is congested.

The following are apparatus embodiments of the present disclosure, which may be used to perform the method embodiments of the present disclosure. For details not disclosed in the apparatus embodiments of the present disclosure, please refer to the method embodiments of the present disclosure.

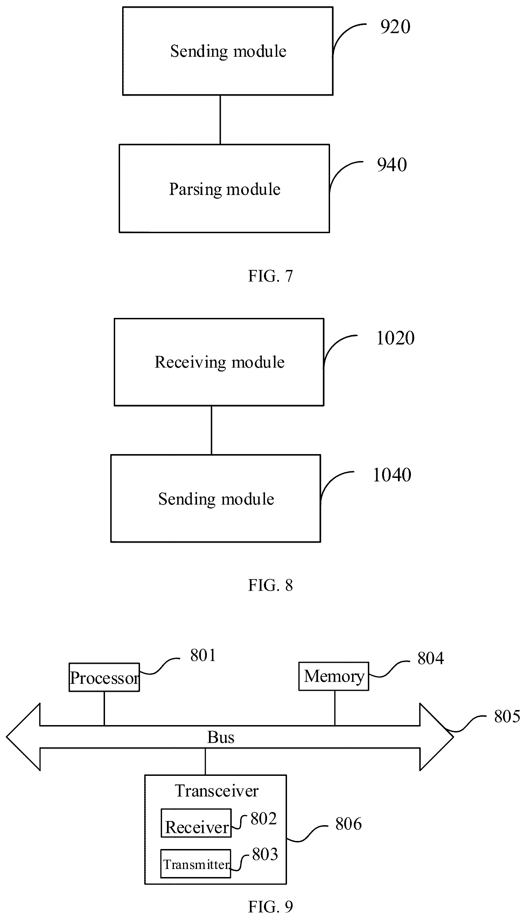

FIG. 7 illustrates a structural block diagram of a configuration apparatus based on a sensing scene provided in an embodiment of the present disclosure. The apparatus has a function for implementing the method examples of the first node mentioned above, and the function may be implemented by hardware, or by hardware executing the corresponding software. The apparatus may be the first node introduced above, or may be set in the first node. As shown in FIG. 7, the apparatus may include the following modules.

A sending module 920 is configured to send configuration information of sensing feedback, where the configuration information of sensing feedback is used to configure at least one of a feedback quantity and a feedback threshold of a second node when sending the sensing feedback.

A parsing module 940 is configured to parse the sensing feedback according to the configuration information of the sensing feedback.

Herein, the sending module 920 may be implemented by a transmitter or a transceiver in a sensing device, and the parsing module 940 may be implemented by a processor in the sensing device.

In a possible implementation, the feedback quantity is used to indicate a number of pieces of feedback information carried in the sensing feedback; the parsing module 940 is configured to parse out N pieces of feedback information from the sensing feedback, where N is a number indicated by the feedback quantity, and N is a positive integer.

In a possible implementation, the N pieces of feedback information include at least one of: N pieces of feedback information sorted in ascending order according to delay values; N pieces of feedback information sorted in descending order according to received energy values; N pieces of feedback information sorted in descending order according to Doppler shift values.

In a possible implementation, the feedback threshold is used to indicate a threshold that feedback information carried in the sensing feedback needs to meet; and the parsing module 940 is configured to parse out, from the sensing feedback, feedback information that meets the feedback threshold.

In a possible implementation, the feedback information that meets the feedback threshold includes at least one of: feedback information with a received energy value greater than or equal to the feedback threshold; feedback information with a Doppler shift value greater than or equal to the feedback threshold; feedback information with a moving speed value greater than or equal to the feedback threshold.

In a possible implementation, the configuration information is related to at least one of the following factors: a sensing service requirement; and resource overhead required for the sensing feedback.

FIG. 8 illustrates a structural block diagram of a configuration apparatus based on a sensing scene provided in an embodiment of the present disclosure. The apparatus has a function for implementing the method examples of the second node mentioned above, and the function may be implemented by hardware, or by hardware executing the corresponding software. The apparatus may be the second node introduced above, or may be set in the second node. As shown in FIG. 8, the apparatus may include the following modules.

A receiving module 1020 is configured to receive configuration information of sensing feedback, where the configuration information of the sensing feedback is used to configure at least one of a feedback quantity and a feedback threshold of the second node when sending the sensing feedback.

A sending module 1040 is configured to send the sensing feedback according to the configuration information of the sensing feedback.

Herein, the receiving module 1020 may be implemented by a receiver or a transceiver in a sensing device, and the sending module 1040 may be implemented by a transmitter or a transceiver in the sensing device.

In some embodiments, there may also be a processing module for generating the sensing feedback or parsing the configuration information of the sensing feedback. The processing module may be implemented by a processor in the sensing device.

In a possible implementation, the feedback quantity is used to indicate a number of pieces of feedback information carried in the sensing feedback; the sending module 1040 is configured to send the sensing feedback, where the sensing feedback carries N pieces of feedback information, N is a number indicated by the feedback quantity, and N is a positive integer.

In a possible implementation, the N pieces of feedback information include at least one of: N pieces of feedback information sorted in ascending order according to delay values; N pieces of feedback information sorted in descending order according to received energy values; N pieces of feedback information sorted in descending order according to Doppler shift values.

In a possible implementation, the feedback threshold is used to indicate a threshold that feedback information carried in the sensing feedback needs to meet; the sending module 1040 is configured to send the sensing feedback, where the sensing feedback carries feedback information that meets the feedback threshold.

In a possible implementation, the feedback information that meets the feedback threshold includes at least one of: feedback information with a received energy value greater than or equal to the feedback threshold; feedback information with a Doppler shift value greater than or equal to the feedback threshold; feedback information with a moving speed value greater than or equal to the feedback threshold.

In a possible implementation, the configuration information is related to at least one factor of: a sensing service requirement; resource overhead required for the sensing feedback.

It needs to be explained that the apparatuses provided in the above embodiments, when implementing the functions thereof, are only described by the division of the above-mentioned functional modules as an example. In actual applications, the above-mentioned functions may be assigned to different functional modules to complete, according to actual needs, that is, content structures of the device may be divided into different functional modules, to complete all or a part of the functions described above.

Regarding the apparatuses in the above embodiments, the specific manner in which each module performs operations has been described in detail in the embodiments about the methods, and will not be elaborated here.

Please refer to FIG. 9, it illustrates a structural schematic diagram of a sensing device provided in an embodiment of the present disclosure. The sensing device may include: a processor 801, a receiver 802, a transmitter 803, a memory 804, and a bus 805.

The processor 801 includes one or more processing cores. The processor 801 executes various functional applications and information processing by running software programs and modules. In some embodiments, the processor 801 may be configured to implement the functions and steps of the above-mentioned parsing module 940.

The receiver 802 and the transmitter 803 may be implemented as a transceiver 806, and the transceiver 806 may be a communication chip. Herein, the receiver 802 may be configured to implement the functions and steps of the above-mentioned receiving module 1020; the transmitter 803 may be configured to implement the functions and steps of the above-mentioned sending module 920 and receiving module 1040.

The memory 804 is connected to the processor 801 via the bus 805.

The memory 804 may be configured to store a computer program, and the processor 801 may be configured to execute the computer program to implement each step executed by the node in the above method embodiments.

In addition, the memory 804 may be implemented by any type of volatile or non-volatile storage device or a combination thereof, and the volatile or non-volatile storage device includes but is not limited to: RAM (Random-Access Memory) and ROM (Read-Only Memory), EPROM (Erasable Programmable Read-Only Memory), EEPROM (Electrically Erasable Programmable Read-Only Memory), flash memory or other solid-state storage technology, CD-ROM (Compact Disc Read-Only Memory), DVD (Digital Video Disc) or other optical storage, tape cassettes, magnetic tapes, disk storage or other magnetic storage devices.

Herein, when the sensing device is implemented as the first node, the processor and transceiver involved in the embodiments of the present disclosure may perform the steps performed by the first node in the method shown in any of FIG. 3 to FIG. 4 above, which will not be repeated here.

In a possible implementation, when the sensing device is implemented as the first node,
the transmitter 803 is configured to send configuration information of sensing feedback, where the configuration information of the sensing feedback is used to configure at least one of a feedback quantity and a feedback threshold of the second node when sending the sensing feedback; and
the processor 801 is configured to parse the sensing feedback according to the configuration information of the sensing feedback.

Herein, when the sensing device is implemented as the second node, the processor and transceiver involved in the embodiments of the present disclosure may perform the steps performed by the second node in the method shown in any of FIG. 9 to FIG. 10 above, which will not be repeated here.

In a possible implementation, when the sensing device is implemented as the second node,
the receiver 802 is configured to receive configuration information of sensing feedback, where the configuration information of the sensing feedback is used to configure at least one of a feedback quantity and a feedback threshold of the second node when sending the sensing feedback; and
the transmitter 803 is configured to send the sensing feedback according to the configuration information of the sensing feedback.

The embodiments of the present disclosure also provide a computer-readable storage medium, with a computer program stored in the storage medium. The computer program is used to be executed by the processors of the first node and the second node to implement the above-mentioned configuration method based on the sensing scene.

Optionally, the computer-readable storage medium may include: ROM (Read-Only Memory), RAM (Random-Access Memory), SSD (Solid State Drives) or an optical disk, etc. Herein, random access memory may include ReRAM (Resistance Random Access Memory) and DRAM (Dynamic Random Access Memory).

The embodiments of the present disclosure also provide a chip, which includes a programmable logic circuit and/or program instructions. When the chip runs on the first node and the second node, it is used to implement the above-mentioned configuration method based on the sensing scene.

The embodiments of the present disclosure also provide a computer program product or a computer program, the computer program product or the computer program includes computer instructions, and the computer instructions are stored in a computer-readable storage medium. The processors of the first node and the second node read and execute the computer instructions from the computer-readable storage medium, to implement the above-mentioned configuration method based on the sensing scene.

It should be understood that the "indication" and variants thereof mentioned in the embodiments of the present disclosure may be a direct indication, an indirect indication, or also represent an associated relationship. For example, A indicates B, which may mean that A directly indicates B, and for example, B may be acquired by A; it may also mean that A indirectly indicates B, and for example, A indicates C, and B may be acquired by C; it may also mean that there is an association relationship between A and B.

In the description of the embodiments of the present disclosure, the term "corresponding" and variants thereof may indicate a direct or indirect correspondence between two items, or an association relationship between the two items, or a relationship between indicating and being indicated, configuring and being configured, etc.

As mentioned herein, "multiple/a plurality of/the plurality of" means two or more. The term "and/or" is to describe an association relationship of associated objects, meaning that there may be three kinds of relationships, and for example, A and/or B may mean three cases where: A exists alone, both A and B exist, and B exists alone. The character "/" generally means that associated objects before and after "/" are in an "or" relationship.

In addition, the step numbers described herein only illustrate a possible execution order between the steps. In some other embodiments, the above steps may not be executed in the order of the numbers, such as two steps with different numbers are executed at the same time, or two steps with different numbers are executed in the opposite order to that shown in the figure(s), which is not limited in the embodiments of the present disclosure.

Those skilled in the art should be aware that in one or more of the above examples, the functions described in the embodiments of the present disclosure may be implemented by hardware, software, firmware or any combination thereof. When implemented by using software, the functions may be stored in a computer-readable medium, or transmitted as one or more instructions or codes on a computer-readable medium. The computer-readable medium includes a computer storage medium and a communication medium, where the communication medium includes any medium that facilitates the transfer of a computer program from one place to another. The storage medium may be any available media that can be accessed by a general-purpose or special-purpose computer.

The above content is only exemplary embodiments of the present disclosure, but not used to limit the present disclosure, and any modification, equivalent substitution, improvement, etc., made within the spirits and principles of the present disclosure, should be all covered within the protection scope of the present disclosure.

## Claims

1. A configuration method based on a sensing scene, wherein the method is performed by a first node, and the method comprises:
sending configuration information of sensing feedback, wherein the configuration information of the sensing feedback is used to configure at least one of a feedback quantity and a feedback threshold of a second node when sending the sensing feedback; and
parsing the sensing feedback according to the configuration information of the sensing feedback.

2. The method according to claim 1, wherein the feedback quantity is used to indicate a number of pieces of feedback information carried in the sensing feedback; and
parsing the sensing feedback according to the configuration information of the sensing feedback, comprises:
parsing out N pieces of feedback information from the sensing feedback, wherein N is a number indicated by the feedback quantity, and N is a positive integer.

3. The method according to claim 2, wherein the N pieces of feedback information comprise at least one of :
N pieces of feedback information sorted in ascending order according to delay values;
N pieces of feedback information sorted in descending order according to received energy values; and
N pieces of feedback information sorted in descending order according to Doppler shift values.

4. The method according to claim 1, wherein the feedback threshold is used to indicate a threshold that feedback information carried in the sensing feedback meets; and
parsing the sensing feedback according to the configuration information of the sensing feedback, comprises:
parsing out, from the sensing feedback, feedback information that meets the feedback threshold.

5. The method according to claim 4, wherein the feedback information that meets the feedback threshold comprises at least one of:
feedback information with a received energy value greater than or equal to the feedback threshold;
feedback information with a Doppler shift value greater than or equal to the feedback threshold; and
feedback information with a moving speed value greater than or equal to the feedback threshold.

6. The method according to any one of claims 1 to 5, wherein the configuration information is related to at least one of:
a sensing service requirement; and
resource overhead required for the sensing feedback.

7. A configuration method based on a sensing scene, wherein the method is performed by a second node, and the method comprises:
receiving configuration information of sensing feedback, wherein the configuration information of sensing feedback is used to configure at least one of a feedback quantity and a feedback threshold of the second node when sending the sensing feedback; and
sending the sensing feedback according to the configuration information of the sensing feedback.

8. The method according to claim 7, wherein the feedback quantity is used to indicate a number of pieces of feedback information carried in the sensing feedback; and
sending the sensing feedback according to the configuration information of the sensing feedback, comprises:
sending the sensing feedback, wherein the sensing feedback carries N pieces of feedback information, N is a number indicated by the feedback quantity, and N is a positive integer.

9. The method according to claim 8, wherein the N pieces of feedback information comprise at least one of:
N pieces of feedback information sorted in ascending order according to delay values;
N pieces of feedback information sorted in descending order according to received energy values; and
N pieces of feedback information sorted in descending order according to Doppler shift values.

10. The method according to claim 7, wherein the feedback threshold is used to indicate a threshold that feedback information carried in the sensing feedback needs to meet; and
sending the sensing feedback according to the configuration information of the sensing feedback, comprises:
sending the sensing feedback, wherein the sensing feedback carries feedback information that meets the feedback threshold.

11. The method according to claim 10, wherein the feedback information that meets the feedback threshold comprises at least one of:
feedback information with a received energy value greater than or equal to the feedback threshold;
feedback information with a Doppler shift value greater than or equal to the feedback threshold; and
feedback information with a moving speed value greater than or equal to the feedback threshold.

12. The method according to any one of claims 7 to 11, wherein the configuration information is related to at least one of:
a sensing service requirement; and
resource overhead required for the sensing feedback.

13. A configuration apparatus based on a sensing scene, wherein the apparatus comprises: a sending module and a parsing module;
the sending module is configured to send configuration information of sensing feedback, wherein the configuration information of the sensing feedback is used to configure at least one of a feedback quantity and a feedback threshold of a second node when sending the sensing feedback; and
the parsing module is configured to parse the sensing feedback according to the configuration information of the sensing feedback.

14. A configuration apparatus based on a sensing scene, wherein the apparatus comprises: a receiving module and a sending module;
the receiving module is configured to receive configuration information of sensing feedback, wherein the configuration information of the sensing feedback is used to configure at least one of a feedback quantity and a feedback threshold of a second node when sending the sensing feedback; and
the sending module is configured to send the sensing feedback according to the configuration information of the sensing feedback.

15. A sensing device, wherein the sensing device comprises: a processor and a transceiver;
the transceiver is configured to send configuration information of sensing feedback, wherein the configuration information of the sensing feedback is used to configure at least one of a feedback quantity and a feedback threshold of a second node when sending the sensing feedback; and
the processor is configured to parse the sensing feedback according to the configuration information of the sensing feedback.

16. A sensing device, wherein the sensing device comprises: a transceiver; and
the transceiver is configured to receive configuration information of sensing feedback, wherein the configuration information of the sensing feedback is used to configure at least one of a feedback quantity and a feedback threshold of a second node when sending the sensing feedback; and send the sensing feedback according to the configuration information of the sensing feedback.

17. A computer-readable storage medium, wherein a computer program is stored in the computer-readable storage medium, and the computer program is used to be executed by a processor so that a sensing device implements the configuration method based on the sensing scene according to any one of claims 1 to 6, or the configuration method based on the sensing scene according to any one of claims 7 to 12.

18. A chip, wherein the chip comprises a programmable logic circuit and/or program instructions, and the chip, when running, causes a sensing device to implement the configuration method based on the sensing scene according to any one of claims 1 to 6, or the configuration method based on the sensing scene according to any one of claims 7 to 12.

19. A computer program product, wherein the computer program product comprises computer instructions, the computer instructions are stored in a computer-readable storage medium, and a processor reads and executes the computer instructions from the computer-readable storage medium, to cause a sensing device to implement the configuration method based on the sensing scene according to any one of claims 1 to 6, or the configuration method based on the sensing scene according to any one of claims 7 to 12.

20. A computer program, wherein the computer program comprises computer instructions, the computer instructions are stored in a computer-readable storage medium, and a processor reads and executes the computer instructions from the computer-readable storage medium, to cause a sensing device to implement the configuration method based on the sensing scene according to any one of claims 1 to 6, or the configuration method based on the sensing scene according to any one of claims 7 to 12.
